# EUROPEAN PATENT APPLICATION

(11) **EP 2 983 261 A1**
(43) Date of publication of application: **10.02.2016**
(21) Application number: 14002718.6
(22) Date of filing: 04.08.2014
(51) Int. Cl.: H02G 5/10

(54) **Bus bar with integrated heat pipe**

(71) Applicant: ABB Technology AG, 8050 Zürich (CH)
(72) Inventor: Merkel, Hans-Peter, 69198 Schriesheim (DE); Kraft, Klaus, 69123 Heidelberg (DE)
(74) Representative: Kock, Ina

(57) **Abstract**

The invention relates to a bus bar body with an integrated heat pipe (1 a, 1 b, 1 c) for a switchgear, in particular a low voltage switchgear, comprising a bus bar body (3a, 3b, 3c, 3d) with an elongated-shaped internal cavity (2a, 2b, 2c), which is sealed and at least partly filled with a liquid cooling medium (4a, 4b, 4c), with a first and a second end, wherein at least one evaporation means (6a, 6b, 6c), which is arranged at least partly in the cavity (2a, 2b, 2c) at the first end and thermally connected to the bus bar body (3a, 3b, 3c, 3d) and configured for evaporating the cooling medium (4a, 4b, 4c), by absorbing thermal energy from the heated bus bar bodybody (3a, 3b, 3c, 3d), and wherein at least one condensation means (8a, 8b, 8c) is provided and arranged at least partly in the cavity (2a, 2b, 2c) at the second end of the body and configured for condensing the evaporated cooling medium (4a, 4b, 4c) by dissipating thermal energy, wherein the condensed cooling medium (4a, 4b, 4c) re-gathers in the cavity (2a, 2b, 2c), so that the bus bar body (3a, 3b, 3c, 3d) is being cooled.

## Description

The invention relates to a bus bar for a switchgear, which increases its temperature when admitted with current. The invention also relates to a switchgear, in particular a low voltage switchgear, comprising at least one such bus bar.

In a common electrical power or power distribution system at least one switchgear is provided typically comprising and/or providing at least one of electrical switches, fuses or circuit breakers, which are used to control, protect, isolate and energize or de-energize various electrical equipment.
In the low voltage range switchgears are used for voltages up to 1 kV and for currents up to several thousand amperes, in particular 6300A.

A switchgear or a switchgear assembly always requires an incoming feeder and in many cases also big outgoing feeders to distribute energy to other parts of the respective installation. These feeders are connected on one side (upper or lower) terminal by flat individual bended copper connection sets to the main busbar system of the switchgear. A second connection set is used on the other side of the feeder to connect cables or bus ducts. The connection set are different, based on the rated current and of the feeder frame size. Furthermore, the connection blocks on the feeders are different for all frame sizes.

Furthermore also the performance of the feeder is dependent on the IP class of the switchgear and ambient temperature of the switchgear location. In most cases a de-rating factor to the feeder nominal current needs to be applied.

In many cases even a bigger feeder need to be selected, which results in more amount of material more difficult handling and/or processing as well as higher costs and increased foot print.

A bus bar in general is built as a flat strip or a bar of copper or aluminium, which has typically no function or minor function as a structural member. The maximum amount of current that can be safely carried by a busbar is determined by its cross-sectional size.

Depending on the respective application and/or size of the switchgear as well as the individual setup and customer needs, for each switchgear the respective busbars have to be pre-processed and mounted or installed individually.

Advantageously flat strips are simple in assembling and or handling but after preprocessing in the field no short time change of the setup is possible anymore.
Furthermore, the flat strip shape allows heat to dissipate due to their surface area but according to the tight packing of the bus bars, in particular several layers, within the switchgear cabinet depending on the applied current the temperature within the cabinet may reach a critical value, so that the current has to be reduced and/or further cooling means have to be applied to the switchgear to avoid damage of the electric devices inside the switchgear.

Bus bars are connected to feeders by conductors, wherein the conductors are typically the hot spot in today's switchgear design. Common conductors are generally built as flat bars which are cooled by thermal conduction. When the conductor is rated with current, it heats up due to its electrical resistance. The heat which is generated by the conductor is mainly led away by the structure of the switchgear, which then dissipates the thermal energy by thermal radiation to the environment.

The feeders and/or bus bars are connected to conductors by flat individual bended copper connection sets. Similar connections are used to connect cables or bus ducts. The connection sets have sizes, based on the rated current and depending on the feeder frame size.

Disadvantageously the flat bar design requires a lot of mechanical work in bending and connecting. This results in very long manufacturing and assembling times. Furthermore, the big variation of connection blocks requires different sizes of connection sets, which have to be pre-processed and may not be changed spontaneously on-site in the field. Therefore, the flat bar design of the state of the art is very burdensome and/or inflexible in handling, assembling and manufacturing.

Disadvantageously, the cooling capacity inside of a breaker compartment is limited. Also the available space for additional cooling components is not available or in case of forced cooling, exemplary by fan cooling, hardly accepted by users. Also due to clearance and creepage constraints direct connected components to the bus bar creates issues.

Furthermore, the bus bar increases its temperature very fast at one or more local hot-spots. The thermal radiation of the bus bar is very low, as the distribution of the thermal energy and the air flow in the switchgear is limited. Disadvantageously, the bus bar heats up very fast, which results in an increased temperature of the switchgear, which impacts the reliability and the lifetime of the switchgear itself. In conclusion, the thermal conductivity of a bus bar is not enough to cool down the hot areas by the pure thermal properties and conductivity. As the lifetime of the switchgear or of switchgear-components is decreased due to the temperature impact, the intervals for maintenance of the switchgear disadvantageously have to be shortened.

Accordingly, it is the objective of this invention to provide a bus bar solution for a switchgear with an improved cooling functionality.

This objective is accomplished according to the present invention by an bus bar arrangement with the features of claim 1. Further embodiments and refinements as well as a switchgear and in particular a low voltage switchgear, are disclosed in further claims sand the following description.

Accordingly the bus bar arrangement according to the invention, comprises at least one bus bar comprising
▪ an electrically conductive body with an elongated shaped internal cavity, in particular the bus bar is built as a hollow cylinder conductor, which is sealed at its first and second end and at least partly filled with a liquid cooling medium,
▪ at least one evaporation means, which is:
   ▪ arranged at least partly in the cavity at the first lower end,
   ▪ thermally connected to the body,
   ▪ configured for evaporating the cooling medium, by absorbing thermal energy from the body,
▪ at least one condensation means, which is:
   ▪ arranged at least partly in the cavity at the second upper end,
   ▪ configured for condensing the evaporated cooling medium by dissipating thermal energy, wherein the condensed cooling medium re-gathers in the cavity, so that the body is cooled by conducting thermal energy from the evaporation means to the condensation means.

The basic idea of the invention is, that a heat pipe is integrated in the bus bar, wherein the heat pipe comprises an internal cavity with an evaporation means and a condensation means, wherein the cavity is filled with a cooling medium. The internal cavity is sealed, so that the vapor of the evaporated cooling medium cannot escape to the outside of the cavity.
The evaporation means is in contact with the hot spot or the hot surface of the bus bar and heats up the cooling medium, which turns into vapor. The vapor then rises along the elongated-shaped internal cavity to the condensation means, which comprises a cold interface. The condensation means condenses the vapor back into liquid and releases the latent heat of the vapor by dissipating it to the environment. The liquid then flows back to the evaporation mean, either by convection flow of heat and/or capillary action and/or by gravity, wherein the cycle or loop repeats when the cooling medium vapors again. Advantageously, the heat pipe is integrated in the bus bar and/or is a, in particular inherent, part of the bus bar, wherein the heat pipe combines the principles of thermal conductivity and phase transition to efficiently manage the transfer of heat in the bus bar.

In a further refinement the heat pipe has a very high heat transfer coefficient due to heat transfer by boiling and condensation. As a heat-pipe is integrated in the bus bar, the invented bus bar leads the thermal energy more efficiently than state of the art bus bars. The effective thermal conductivity of the elongated shaped bus bar varies with the length of the sealed internal cavity, wherein the thermal conductivity of the invented bus bar can approach 80.000 W/mK for an internal cavity with very high length. Compared thereto, the thermal conductivity of a state of the art copper bus bar is approximately 400 W/mK. Hence, the thermal conductivity of the invented bus bar is increased significantly.

In a further advantageous embodiment, the condensed cooling medium is leaded by a guiding-mean, so that the cooling medium re-gathers in the cavity. The guiding mean can be any kind of guiding-mean, which leads the condensed cooling medium, for example a tube or a bunch of tubes. In another variant, the guiding mean is configured as a separation means of the internal cavity, wherein one side of the internal cavity is configured to let the vapor rise up to the condensation-mean and the other side of the cavity is used to let the vapor flow back to the evaporation means.

In an advantageous embodiment, the guiding-mean is at least one groove, which is at least partly formed at the inner side of the internal cavity. Advantageously, the condensation-mean is mounted over the evaporation means, so that the condensed cooling medium runs back due to gravity. Hence, the elongated shaped bus bar is advantageously mounted in an upright position, wherein the condensed cooling medium runs back in a channel or a pipe.

In a further advantageous embodiment, the guiding-mean is at least one wick-structure, which is attached at least partly of the inner side of the internal cavity. The fluid is therefore flowing back by capillary action. To maintain the effect of capillary action, it is required that the wick structure is at least partly immersed in the cooling medium. The amount of cooling medium has to be sufficient, so that the flow of the cooling medium by the capillary action does not break of, even when the cooling medium evaporates. The wick-structure can be exemplary sintered metal powder or a grooved wick, which has a series of grooves parallel to the elongated-shaped internal cavity.

In a preferred embodiment, the cooling medium is at least partly water. Advantageously water vaporizes from its melting point (0°C) to its critical point (about 374°C), as long as the internal cavity contains both liquid and vapor. Hence, the evaporation means advantageously operates at hot-end temperatures as low as just slightly warmer than the melting point, wherein the melting point and the critical point are depending on the pressure in the internal cavity. As the thermal energy is rapidly transferred to the cold condensation-mean by the vapor, the bus bar contains advantageously a very effective heat transfer system. As no moving parts are integrated, the bus bar requires advantageously very low maintenance.

In a further advantageous variant, at least one connection-mean is attached to the respective end of the elongated shaped body, so that the cavity is sealed. Therefore, the internal cavity is formed in the body of the bus bar, wherein the internal cavity is sealed by the respective connection-mean. The respective connection-mean is attached to the body via a respective sealing, so that the internal cavity is sealed hermetically. Advantageously, the connection-mean can be removed for maintenance purposes or in case that the cooling medium has to be refilled.

Furthermore, a switchgear, in particular a low voltage switchgear is claimed, which comprises at least one bus bar arrangement as described above and according to the invention, wherein the at least one bus bar arrangement comprises at least one bus bar comprising
▪ an electrically conductive body with an elongated shaped internal cavity, in particular the bus bar is built as a hollow cylinder conductor, which is sealed at its first and second end and at least partly filled with a liquid cooling medium,
▪ at least one evaporation means, which is:
   ▪ arranged at least partly in the cavity at the first lower end,
   ▪ thermally connected to the body,
   ▪ configured for evaporating the cooling medium, by absorbing thermal energy from the body,
▪ at least one condensation means, which is:
   ▪ arranged at least partly in the cavity at the second upper end,
   ▪ configured for condensing the evaporated cooling medium by dissipating thermal energy, wherein the condensed cooling medium re-gathers in the cavity, so that the body is cooled by conducting thermal energy from the evaporation means to the condensation means.

In a further refinement for each phase such a bus bar arrangement is provided.

These features and further advantageous embodiments are disclosed in the claims and shall be illustrated and discussed by further execution examples and corresponding drawings.

The attached drawings show in
Fig. 1: an exemplary first bus bar arrangement according to the invention,
Fig. 2: an exemplary cross section cut through a second bus bar arrangement,
Fig. 3: an exemplary schematic view of a third bus bar arrangement and
Fig. 4: an exemplary schematic view of a fourth bus bar arrangement.

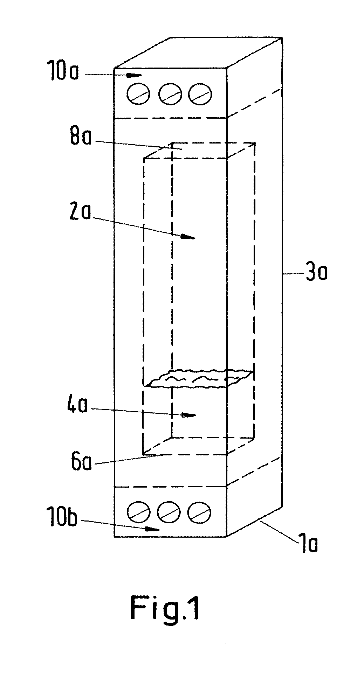

Fig. 1 shows an exemplary bus bar arrangement 1 a, which comprises an internal cavity 2a, which is at least partly filled with a cooling medium 4a. Both the bus bar arrangement1a and the internal cavity 2a are typically elongated shaped. Due to the elongated shape, the internal cavity 2a comprises two ends, wherein at the first end an evaporation means 6a is mounted and at the second end a condensation-mean 8a is mounted. The bus bar arrangement1a comprises at its respective ends a respective connection-mean 10a, 10b, which seals the internal cavity 2a.

The body as well as the cavity comprise a rectangular, in particular a quadratic, cross section.

The cooling medium 4a is exemplary ammonia, alcohol, ethanol or water. As material for the bus bar arrangement1a typically copper is used, wherein water is typically used as cooling medium 4a. The bus bar arrangement1a operates exemplary in the temperature range between 20°C and 150°C.

In the following, the working principle is described. The cooling medium 4a is saturated liquid, wherein the saturated liquid vaporizes and rises to the condensation-mean 8a, where it is cooled and turned back to saturated liquid. When the condensation-mean is located above the evaporation means, gravity returns the condensed cooling medium. Therefore, the invented bus bar arrangement works as a thermosyphon.

The invention describes the combination of a heat pipe functionality with a bus bar arrangement design to form a unit which provides a higher thermal conductivity compared to standard bars. The bus bar arrangement is designed as a heat pipe, so no additional components are required. The increased thermal conductivity is suitable to increase the thermal behavior of the whole system. The bus bars can also be designed as components, to fit in the frame design and therefore no additional efforts are required to built-in additional cooling components.

With this approach the thermal design become a configurable item, by using the predefined special bus bars, instead of a principal design work. Dependent on the thermal requirements, according components, with specified thermal conductivity, can be selected and built in. The overall design of the frame work will not change, but the overall thermal behavior of the system.

The focus of the invention lays in the configurable bus bars with according thermal conductivity. The main improvement is the configuration of a switchboard based on the thermal conductivity as additional parameter based on the special bus bars components.

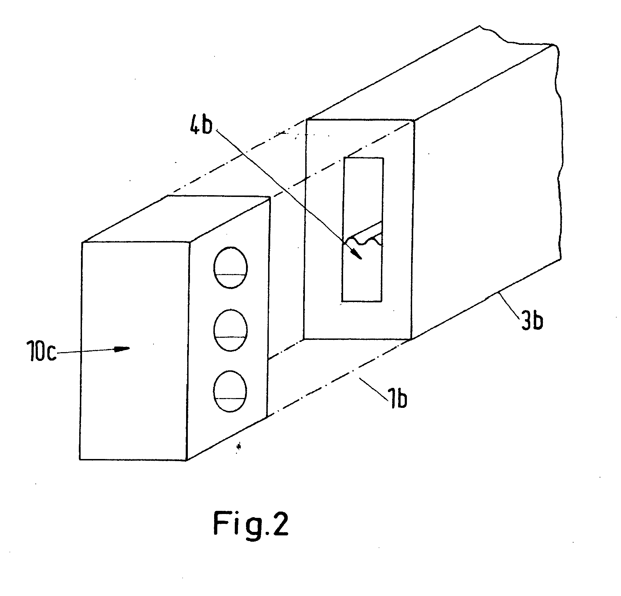

Fig. 2 depicts exemplary a cross sectional cut through a second bus bar arrangement 1c with a body 3b. The cooling medium 4b is enclosed by an internal cavity, wherein the internal cavity is sealed, so that no vapor can diffuse through the body 3b. The internal cavity might be sealed by the depicted connection-mean 10c, which is connected via a sealing to the body 3b. The connection-mean 10c can further comprise connections or adapters for conductors, which provide the electrical current. As the bus bar arrangement 3b with the integrated heat-pipe contains no moving parts, it requires typically no maintenance. Nevertheless, the body and the sealing advantageously has to be controlled for leakages, so that no vapor can diffuse through a leakage in the sealing, or through cracks in the body 3b of the bus bar arrangement 1 c.

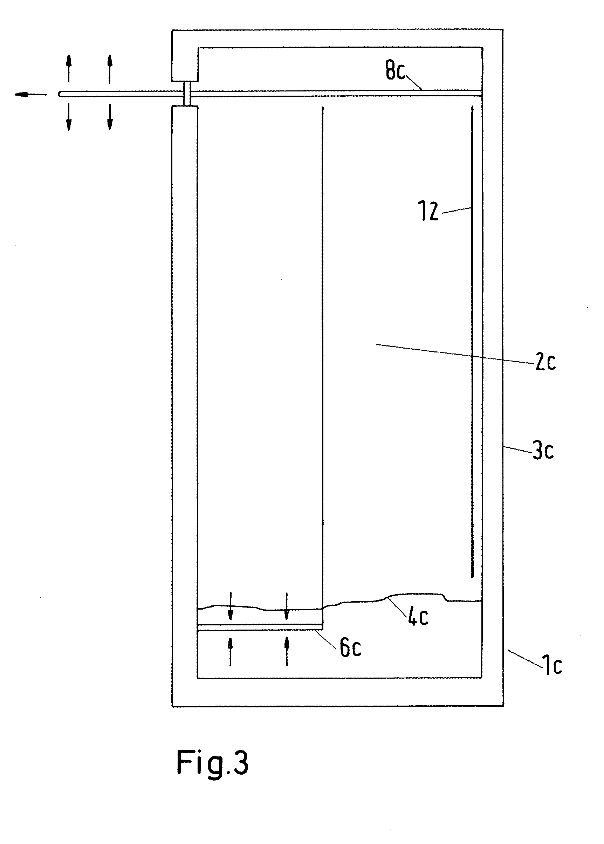

Fig. 3 shows an exemplary schematic view of a third bus bar arrangement 1 c, wherein a cooling medium 4c is filled in a sealed internal cavity 2c. An evaporation means 6c is connected with a body 3c of the bus bar arrangement 1 c. Advantageously, the evaporation means 6c is connected to the hot-spot of the bus bar arrangement 1 c. Hence, the evaporation means 6c leads the thermal energy away from the hot-spot by heating-up and evaporating the cooling medium 4c. The vapor of the cooling medium 4c then rises up and condenses at the condensation-mean 8c. The condensation-mean 8c is typically connected to a heat radiator which is configured for dissipating the thermal energy from the bus bar arrangement 1 c to the environment.

Typically at least one groove 12 is foreseen at the inner side of the internal cavity, which leads the condensed cooling medium 4c back to the evaporation means 6c by gravitational force. In the depicted embodiment, the internal cavity 2c is furthermore separated in two compartments by a partition wall in the middle. The vapor rises up in the first compartment, in which the evaporation means 6c is mounted, and the condensed cooling medium 4c flows back in the second compartment. The second compartment is turned away from the evaporation means 6c. By separating the internal cavity 2c in two compartments, the cooling efficiency of the bus bar arrangement 1 c is increased significantly. The condensation-mean 8c is thermally isolated from the body 3c of the bus bar arrangement 1 c, so that the thermal energy from the condensation-mean is not transferred back to the body 3c.

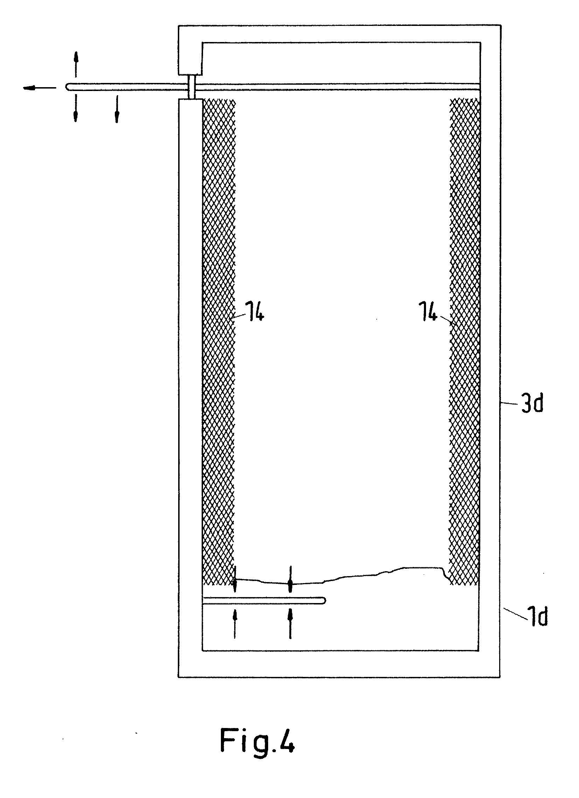

Fig. 4 depicts an exemplary schematic view of a fourth bus bar arrangement 1d. The bus bar arrangement 1 d comprises a body 3d, wherein at its inner side a wick-structure 14 is attached. During normal operation, the body 3d and especially the evaporation means are heated. The vapor rises up to the condensation-mean and liquid returns to the evaporation means by capillary forces in the wick-structure 14. Sufficient amount of cooling medium has to be filled in the internal cavity, so that the internal cavity is prevented from drying out, even when the bus bar arrangement is heating-up. In case that the internal cavity dries out, the cooling medium is trapped in the wicked structure as the reservoir wick is not connected anymore and the capillary force ceases. Hence, the cooling medium is trapped in the reservoir, and the heat pipe ceases operation. In this case, the conductor has to be cooled down, so that the cooling medium can run out of the wick-structure 14. Hence, the condensed liquid returns to the evaporation means 6a by a wick-structure, which is at least partly attached at the inner side of the internal cavity. The wick structure is typically made of sintered metal powder, screen and/or grooved wicks. Typically, the wick structure has a series of grooves parallel to the pipe axis, so that the condensed cooling-liquid is guided.

### List of reference signs

- 1a: First bus bar
- 1b: Second bus bar
- 1c: Third bus bar
- 1d: Fourth bus bar

- 2a: First internal cavity
- 2b: Second internal cavity
- 2c: Third internal cavity

- 3a: First body
- 3b: Second body
- 3c: Third body

- 4a: First cooling medium
- 4b: Second cooling medium
- 4c: Third cooling medium

- 6a: First evaporation means
- 6b: Second evaporation means
- 6c: Third evaporation means

- 8a: First condensation-mean
- 8b: Second condensation-mean
- 8c: Third condensation-mean

- 10a: First connection-mean
- 10b: Second connection-mean
- 10c: Third connection-mean
- 12: Groove
- 14: Wick-structure

## Claims

1. Bus bar arrangement (1 a, 1 b, 1 c) for a switchgear, in particular a low voltage switchgear, comprising:
▪ a body (3a, 3b, 3c, 3d) with an elongated-shaped internal cavity (2a, 2b, 2c), which is sealed and at least partly filled with a cooling medium (4a, 4b, 4c), with a first and a second end,
▪ at least one evaporation means (6a, 6b, 6c), which is:
▪ arranged at least partly in the cavity (2a, 2b, 2c) at the first end,
▪ thermally connected to the body (3a, 3b, 3c, 3d),
▪ configured for evaporating the cooling medium (4a, 4b, 4c), by absorbing thermal energy from the body (3a, 3b, 3c, 3d),
▪ at least one condensation-mean (8a, 8b, 8c), which is:
▪ arranged at least partly in the cavity (2a, 2b, 2c) at the second end,
▪ configured for condensing the evaporated cooling medium (4a, 4b, 4c) by dissipating thermal energy, wherein the condensed cooling medium (4a, 4b, 4c) re-gathers in the cavity (2a, 2b, 2c), so that the body (3a, 3b, 3c, 3d) is cooled by conducting thermal energy from the evaporation means (6a, 6b, 6c) to the condensation-mean (8a, 8b 8c).

2. Bus bar arrangement (1 a, 1 b, 1 c) according to claim 1, **characterized in that** the condensed cooling medium (4a, 4b, 4c) is leaded by a guiding-mean, so that the cooling medium re-gathers in the cavity (2a, 2b, 2c).

3. Bus bar arrangement (1a, 1b, 1c) according to claim 2, **characterized in that** the guiding-mean is at least one groove (10), which is at least partly formed at the inner side of the internal cavity (2a, 2b, 2c).

4. Bus bar arrangement (1 a, 1 b, 1 c) according to claim 2 or 3, **characterized in that** the guiding-mean is at least one wick-structure (12), which is attached at least partly of the inner side of the internal cavity (2a, 2b, 2c).

5. Bus bar arrangement (1a, 1b, 1c) according to one of the preceding claims, **characterized in that** the cooling medium (4a, 4b 4c) is at least partly water.

6. Bus bar arrangement (1a, 1b, 1c) according to one of the preceding claims, **characterized in that** at least one connection-mean (10a, 10b, 10c) is attached to the respective end of the elongated shaped body (3a, 3b, 3c, 3d), so that the cavity (2a, 2b, 2c) is sealed.

7. Switchgear, in particular a low voltage switchgear, comprising at least one bus bar arrangement according to one of the preceding claims 1 to 6.

8. Switchgear according to claim 7, **characterized in that** for each phase a bus bar arrangement according to one of the claims 1 to 7 is provided.
